# EUROPÄISCHE PATENTSCHRIFT

(11) **EP 0 792 406 B1**
(45) Veröffentlichungstag und Bekanntmachung des Hinweises auf die Patenterteilung: **03.02.1999**
(21) Anmeldenummer: 95937757.3
(22) Anmeldetag: 14.11.1995
(51) Int. Cl.: E06B 3/66, G02F 1/15

(54) **VERGLASUNGSELEMENT, INSBESONDERE ZUR GEBÄUDEFASSADENVERKLEIDUNG**
GLAZING UNIT, IN PARTICULAR FOR CLADDING A BUILDING FACADE
ELEMENT DE VITRAGE, NOTAMMENT POUR REVETEMENT DE FACADE DE BATIMENT

(30) Priorität: 14.11.1994 DE 4440572
(43) Veröffentlichungstag der Anmeldung: 03.09.1997
(73) Patentinhaber: FRAUNHOFER-GESELLSCHAFT ZUR FÖRDERUNG DER ANGEWANDTEN FORSCHUNG E.V., 80636 München (DE)
(72) Erfinder: GRAF, Wolfgang, D-79427 Eschbach (DE); GEORG, Andreas, D-79112 Freiburg (DE); WITTWER, Volker, D-79112 Freiburg (DE); KÖHL, Michael, D-79379 Müllheim (DE); BRUCKER, Franz, D-79102 Freiburg (DE); GOMBERT, Andreas, D-79106 Freiburg (DE); THOMAS, Ludwig, K., D-12205 Berlin (DE)
(74) Vertreter: Münich, Wilhelm, Dr.
(86) Internationale Anmeldenummer: DE9501573
(87) Internationale Veröffentlichungsnummer: WO9615348

(56) Entgegenhaltungen:
- BE-A- 894 645
- CH-A- 375 848
- DE-A- 1 596 819
- US-A- 4 338 000
- PATENT ABSTRACTS OF JAPAN vol. 007 no. 070 (P-185) ,23.März 1983 & JP,A,58 000752 (ORIENT TOKEI KK) 5.Januar 1983,

## Beschreibung

### Technisches Gebiet

Die Erfindung bezieht sich auf ein Verglasungselement, insbesondere zur Gebäudefassadenverkleidung mit wenigstens zwei Scheiben.

### Stand der Technik

Die Regelung von Strahlungsflüssen durch Fenster und Glas fassaden stellt ein zentrales Problem bei der Nutzung der Sonnenenergie in Gebäuden dar. Der Energie- und Lichtbedarf im Gebäude ist häufig nicht mit dem solaren Angebot korreliert. Das führt entweder zur Überhitzung an sonnigen Tagen oder bei Verwendung von Sonnenschutzgläsern zu einer zu geringen Ausnutzung der Sonnenenergie während der Heizperiode. Mechanische Verschattungssysteme ermöglichen zwar eine variable Solartransmission, sind aber häufig sehr wartungs-und damit kostenintensiv.

Gegenwärtig werden große Anstrengungen unternommen die Lichttransmission von Fenstern durch sogenannte elektrochrome Schichtsysteme regelbar bzw. schaltbar zu machen. Hierbei wird die Transmission durch Zuführung von Ionen verändert. Typischerweise bestehen diese Mehrschichtsysteme aus einem fünfschichtigen Aufbau: zwei leitfähige, transparente Elektroden, eine ionenleitende Schicht, eine lonenspeicherschicht und die aktive Schicht, z.B. Wolframoxid. Derartige Schichtsysteme sind vom Aufbau her teuer und zeigen Schwierigkeiten in der Homogenität ihres Schaltverhaltens und ihrer TemperaturabhängigKeit.

Die vorstehend beschriebenen Mehrschichtsysteme sind beispielsweise in der US 4 338 000 oder der DE-OS 24 36 174 näher berschrieben. Aus diesen Druckschriften geht insbesondere hervor, daß die chromatische Änderung durch Anlegen eines äußeren elektrischen Feldes bewirkt wird. Würde man großflächige Verglasungselemente zum Verkleiden von Gebäudefassaden verwenden, so würde der für die chromatische Änderung erforderliche elektrische Energiebedarf sehr groß sein und damit finanziell unattraktiv werden.

Desweiteren sind Verglasungselemente der vorstehend beschriebenen Art nicht geeignet für explosionsgefährdete Räumen, zumal großflächige Elektroden, wie sie für das Anlegen einer Spannung benötigt werden, erheblich zum Funkenrisiko beitragen.

Bekannt sind ferner photochrome und thermochrome Beschichtungen auf Verglasungselementen, die ihre Transmission in Abhängigkeit vom Lichteinfall oder der Temperatur ändern. Nachteilig bei diesen bekannten Beschichtungen ist jedoch, daß die Transmission von photobzw. thermochromen Beschichtungen nicht willkürlich eingestellt werden kann. Als Literaturstelle sei in diesem Zusammenhang auf die DE-A-1 596 819 verwiesen, in der ein Verfahren und eine Verglasung zur Gleichmäßigmachung der durch die Verglasung hindurchtretenden Energiemenge, um die Verglasung eine veränderliche Durchlässigkeit zu geben, beschrieben.

### Darstellung der Erfindung

Der Erfindung liegt die Aufgabe zugrunde, ein Verglasungselement, insbesondere zur Gebäudefassadenverkleidung mit wenigstens zwei Scheiben derart weiterzubilden, daß zur chromatischen Eintrübung des Verglasungselements kein großer Energiebedarf notwendig ist, so daß der Transmissionsgrad individuell den aktuellen Strahlungsverhältnissen angepaßt werden kann. Insbesondere sollte auf die Einspeisung von elektrischer Energie verzichtet werden.

Eine erfindungsgemäße Lösung dieser Aufgabe ist im Patentanspruch 1 angegeben. Vorteilhafte Ausführungsformen sind Gegenstand der Ansprüche 2 ff.

### Beschreibung der Erfindung

Das erfidnungsneäße Verglasungselement, insbesondere zur Gebäudefassadenverkleidung mit zwei, einen Zwischenraum einschließenden Scheiben, und mit einem auf wenigsten einer den Zwischeraum zugewandten Scheibenoberfläche vorgesehenen Beschichtungsaufbau sowie einer in dem Zwischenraum befindlichen Gasatmosphäre,
zeichnet sich dadurch aus, daß der Beschichtungsaufbau eine auf einer Scheibe aufgebrachte reaktive Schicht und eine auf der reaktiven Schicht aufgebrachte Katalysatorschicht aufweist, die in Abhängigkeit von der Zusammensetzung der zwischen den Scheiben enthaltenen Gasatmosphäre eine die optischen und/oder elektrischen Eigenschaften der reaktiven Schicht ändernde Reaktion in der reaktiven Schicht aktiviert und daß Mittel zur Variation der Zusammensetzung der Gasatmosphäre in dem Zwischenraum vorgesehen sind, wodurch die elektrischen und/oder optischen Eigenschaften der reaktiven Schicht änderbar sind.

Die optische Eigenschaft, die durch die Reaktion in der reaktiven Schicht reversibel geändert wird, kann dabei insbesondere die Transmission des Beschichtungsaufbaus bzw. der Energiedurchlaßfaktor für Licht in einem bestimmten Spektralbereich sein.

Im Anspruch 2 sind verschiedene Materialien, nämlich Wolframoxid, Molybdänoxid, Titanoxid, Vanadiumoxid, Chromoxid bzw. Ceroxid für die reaktive Schicht angegeben.

Sämtliche Materialien ändern bei entsprechenden Reaktionen ihre Transmission, wobei sich die verschiedenen Materialien in ihrer Farbe bei "Eindunkelung" unterscheiden. Darüberhinaus ändern sie auch ihre elektrischen Eigenschaften. Beispielsweise steigt bei Wolframoxid durch die Reaktion die Leitfähigkeit um Größenordnungen.

Durch die Dicke der reaktiven Schicht, wie sie im Anspruch 3 angegeben ist, kann der gewünschte maximale Schalthub des Beschichtungsaufbaus eingestellt werden:

Beispielsweise ist bei einer Schichtdicke von 200nm Wolframoxid die Transmission 70% im nichteingedunkelten Zustand und 30% im eingedunkelten Zustand. Bei einer Schichtdicke von 500nm ist entsprechend die Transmission im nichteingedunkelten Zustand 65% und im eingedunkelten Zustand 3%.

Als Katalysatorschichten kommen bevorzugt Schichten aus Platin, Rodium, Palladium und/oder Nickel in Frage, deren Dicke typischerweise zwischen 1nm und 5nm beträgt. Durch die Dicke der Katalysatorschicht kann die Geschwindigkeit des Schaltvorgangs und die Transmission im aufgehellten Zustand eingestellt werden. So beträgt bei einer Katalysatorschicht von 1 nm die Schaltzeit der Beschichtung weniger als ca. 1 Sekunde und bei einer Dicke von 5nm typischerweise 30 Sekunden.

Die Reaktion, durch die die optischen und/oder elektrischen Eigenschaften der reaktiven Schicht reversibel geändert werden, kann typischerweise durch eine Änderung des Wasserstoff-Anteils und des Sauerstoff-Anteils der Gasatmosphäre, die in Kontakt mit dem Beschichtungsaufbau ist, ausgelöst werden. Dabei genügt für die Einfärbung bei sauerstoffreier Atmosphäre ein Wasserstoff-Anteil von ca. 1%. Um die Einfärbung wieder rückgängig zu machen, ist es lediglich erforderlich den Sauerstoff-Anteil einer wasserstoffreien Gasatmosphäre auf 0,5% zu erhöhen. Dabei beziehen sich die Prozentzahlen auf einen Gesamtdruck der Gasatmosphäre von ca. 1 bar. Die Entfärbung kann ferner mit atmosphärischer Luft erfolgen.

Wird eine Schaltung der Transmission nur im sichtbaren Spektralbereich des Lichts gewünscht, so kann der erfindungsgemäße Beschichtungsaufbau mit einer low-ε-Schicht kombiniert werden, die im Infrarotbereich reflektiert und im sichtbaren Bereich durchlässig ist. Die low-E-Schicht kann beispielsweise eine dünne Silber oder Halbleiterschicht, wie Indium-Zinnoxid sein. Durch die low-ε-Schicht werden insbesondere thermische Verluste durch Verglasungselemente gesenkt. Die low-ε-Schicht wird vorzugsweise auf eine der Innenflächen der sich gegenüberliegenden Scheiben angebracht. Auf diese Weise wird der Wärmefluß durch das gesamte Verglasungselement unterbrochen.

Der erfindungsgemäße Beschichtungsaufbau kann auf beliebigen Substraten, wie Glas und/oder Polymersubstraten und/oder metallischen Substraten aufgebracht werden.

### Kurze Beschreibung der Figuren

Eine vorteilhafte Ausführungsform eines erfindungsgemäßen Verglasungsgelementes ist in den Figuren zu näheren Beschreibung angegeben. Es zeigen:
- Fig. 1: Vorteilhafte Ausführungsform eines erfindungsgemäßen Verglasungselements im Querschnitt und
- Fig. 2: Transmissions-/ Wellenlängendiagramm für ein Verglasungselement.

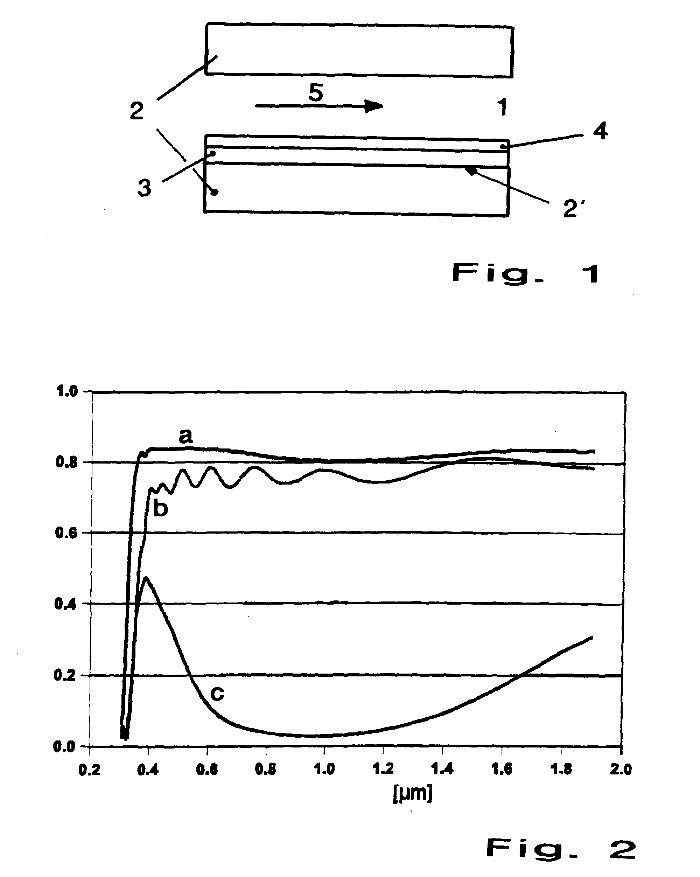

In Figur 1 ist das erfindungsgemäße Verglasungselement im Querschnitt dargestellt. Auf einer der beiden, einen Zwischenraum 1 einschließenden Scheiben 2 ist auf der Scheibenoberfläche 2' ein Beschichtungsaufbau vorgesehen ist, der eine reaktive Schicht 3 und eine auf der reaktiven Schicht aufgebrachte Katalysatorschicht 4 aufweist. Die Herstellung der Schichten ist sowohl mit Aufdampfen, als auch mit reaktivem Sputtern möglich.

Die zur Einfärbung der reaktiven Schicht 3, die vorzugsweise aus einer Wolframoxidschicht besteht, benötigten Protonen werden durch die Katalysatorschicht 4 direkt aus dem Gasstrom 5, der zwischen den Scheiben 2 parallel hindurchgeleitet wird, entnommen. Für die Einfärbung genügt bei Abwesenheit von Sauerstoff bereits ein Wasserstoffanteil im Promillebereich. Zur homogenen Einfärbung über die gesamte Fläche des Verglasungselements wird die Wasserstoffkonzentration auf die Katalysatorschicht hin abgestimmt. Zur Entfärbung hingegen genügt das Beaufschlagen mit sauerstoffhaltigem Gas, zum Beispiel Luft. Diese Prozesse sind jeweils reversibel.

Mit Hilfe des erfindungsgemäßen Verglasungselements kann auf den Einsatz von elektrischen Strom vollständig verzichtet werden. Durch diesen Vorteil reduziert sich der Schichtaufbau des Verglasungselementes erheblich.

Aus Figur 2 ist eine Diagrammdarstellung zu entnehmen, die die Varianz der Transmissionseinstellung des Verglasungselementes angibt. An der Ordinate ist der Transmissiongrad und an der Abszisse die Wellenlänge angetragen. Die Kurve a gibt den Transmissionverlauf zweier unbeschichteter Scheiben 2 an. Die Kurve b zeigt das Transmissionsverhalten des erfindungsgemäß beschichteten Verglasungselements im entfärbten Zustand, d.h. zwischen den Scheiben 2 ist ein genügend viel Sauerstoff vorhanden. Die Kurve c zeigt hingegen den Transmissionsgrad des Verglasungselementes im eingefärbten Zustand, d.h. die Transmission ist sehr gering. Beträgt die maximale Transmission der Kurve b etwa 0.75, so beträgt der Minimalwert der Kurve c nur noch 0.18, d.h. der Transmissionsbereich der von den Kurven b und c eingeschlossen wird kann individuell mit Hilfe geeigneter Gaszufuhr zwischen den beiden Scheiben 2 geregelt werden.

## Patentansprüche

1. Verglasungselement, insbesondere zur Gebäudefassadenverkleidung, mit zwei, einen Zwischenraum (1) einschließenden Scheiben (2), und mit einem auf wenigsten einer den Zwischeraum zugewandten Scheibenoberfläche (2') vorgesehenen Beschichtungsaufbau sowie einer in dem Zwischenraum befindlichen Gasatmosphäre,
dadurch **gekennzeichnet,** daß der Beschichtungsaufbau eine auf einer Scheibe aufgebrachte reaktive Schicht (3) und eine auf der reaktiven Schicht aufgebrachte Katalysatorschicht (4) aufweist, die in Abhängigkeit von der Zusammensetzung der zwischen den Scheiben enthaltenen Gasatmosphäre eine die optischen und/oder elektrischen Eigenschaften der reaktiven Schicht ändernde Reaktion in der reaktiven Schicht aktiviert und
daß Mittel zur Variation der Zusammensetzung der Gasatmosphäre in dem Zwischenraum vorgesehen sind, wodurch die elektrischen und/oder optischen Eigenschaften der reaktiven Schicht änderbar sind.

2. Verglasungselement nach Anspruch 1,
dadurch **gekennzeichnet,** daß die reaktive Schicht (3) Wolframoxid, Molybdänoxid, Titanoxid, Vanadiumoxid, Chromoxid und/oder Ceroxid enthält.

3. Verglasungselement nach Anspruch 2,
dadurch **gekennzeichnet,** daß die Dicke der reaktiven Schicht (3) zwischen 100 nm und 800 nm beträgt.

4. Verglasungselement nach einem der Ansprüche 1 bis 3,
dadurch **gekennzeichnet,** daß die Katalysatorschicht (4) Platin, Rhodium, Palladium und/oder Nickel enthält.

5. Verglasungselement nach Anspruch 4,
dadurch **gekennzeichnet,** daß die Dicke der Katalysatorschicht (4) zwischen 1 nm und 5 nm beträgt.

6. Verglasungselement nach einem der Ansprüche 2 bis 5,
dadurch **gekennzeichnet,** daß zur Verringerung der Transmission der Wasserstoff-Anteil der Gasatmosphäre erhöht wird.

7. Verglasungselement nach Anspruch 6,
dadurch **gekennzeichnet,** daß der Wasserstoff-Anteil bei sauerstoffreier Atmosphäre etwa 1% beträgt.

8. Verglasungselement nach einem der Ansprüche 2 bis 7,
dadurch **gekennzeichnet,** daß zur Erhöhung der Transmission der Sauerstoff-Anteil der Gasatmosphäre erhöht wird.

9. Verglasungselement nach Anspruch 8,
dadurch **gekennzeichnet,** daß der Sauerstoff-Anteil bei wasserstoffreier Atmosphäre etwa 0,5% beträgt.

10. Verglasungselement nach Anspruch 8,
dadurch **gekennzeichnet,** daß die Erhöhung der Transmission mit atmosphärischer Luft erfolgt.

11. Verglasungselement nach einem der Ansprüche 1 bis 10,
dadurch **gekennzeichnet,** daß eine im Infrarotbereich reflektierende und eine im sichtbaren Bereich durchlässige dünne Schicht vorgesehen ist.

12. Verglasungselement nach Anspruch 11,
dadurch **gekennzeichnet,** daß die dünne Schicht eine Silber- oder Halbleiterschicht ist.

13. Verglasungselement nach einem der Ansprüche 1 bis 12,
dadurch **gekennzeichnet,** daß die Scheibe (2) ein Glasund/oder Polymersubstrat und/oder ein metallisches Substrat ist.

## Claims

1. Glazing unit, in particular for cladding a building façade, comprising two panes (2) enclosing a space (1) and a coating layer structure provided on at least one pane surface (2') facing said space, as well as a gas atmosphere provided in said space,
**characterised in** that said coating layer structure comprises a reactive layer (3) applied on a pane and a catalytic layer (4) applied on said reactive layer, which activates a reaction in said reactive layer as a function of the composition of the gas atmosphere enclosed between said panes, which reaction varies the optical and/or electrical properties of said reactive layer, and
that means are provided for varying the composition of said gas atmosphere in said space such that said electrical and/or optical properties of said reactive layer are variable.

2. Glazing unit according to Claim 1,
**characterised** in that said reactive layer (3) contains tungsten dioxide, molybdenum oxide, titanium oxide, vanadium oxide, chromium oxide and/or cerium oxide.

3. Glazing unit according to Claim 2,
**characterised** in that the thickness of said reactive layer (3) is within the range from 100 nm to 800 nm.

4. Glazing unit according to any of the Claims 1 to 3,
**characterised** in that said catalytic layer (4) contains platinum, rhodium, palladium and/or nickel.

5. Glazing unit according to Claim 4,
**characterised** in that the thickness of said catalytic layer (4) is within the range from 1 nm to 5 nm.

6. Glazing unit according to any of the Claims 2 to 5,
**characterised** in that the hydrogen percentage in said gas atmosphere is increased for a reduction of transmission.

7. Glazing unit according to Claim 6,
**characterised** in that the hydrogen percentage amounts to roughly 1 % with an oxygen-free atmosphere.

8. Glazing unit according to any of the Claims 2 to 7,
**characterised** in that the oxygen percentage in said gas atmosphere is increased for an increase of transmission.

9. Glazing unit according to Claim 8,
**characterised** in that the oxygen percentage amounts to roughly 0.5 % with a hydrogen-free atmosphere.

10. Glazing unit according to Claim 8,
**characterised** in that transmission is increased with atmospheric air.

11. Glazing unit according to any of the Claims 1 to 10,
**characterised** in that a thin layer is provided which is reflective in the infrared range and transmissive in the visible range.

12. Glazing unit according to Claim 11,
**characterised** in that said thin layer is a silver or semiconductor layer.

13. Glazing unit according to any of the Claims 1 to 12,
**characterised** in that said pane (2) is a glass and/or polymer substrate and/or a metal substrate.

## Revendications

1. Elément de vitrage, notamment pour revêtement de façade de bâtiment, comprenant deux vitres (2), qui renferment un espace (1), et une structure de revêtement, qui est prévu sur au moins une surface de (2') en face dudit espace, ainsi qu'une atmosphère de gaz au dedans dudit espace,
**caractérisé en ce que** ladite structure de revêtement comprend une couche réactive (3) appliquée sur une vitre et une couche catalysateur (4) appliquée sur ladite couche réactive, qui induit une réaction dans ladite couche réactive en fonction de la composition de l'atmosphère de gaz renfermée entre lesdites vitres, laquelle réaction varie les propriétés optiques et/ou électriques de ladite couche réactive, et
en ce que des moyens sont disposés pour une variation de la composition de ladite atmosphère de gaz dans ledit espace de façon que lesdites propriétés électriques et/ou optiques de ladite couche réactive soient variables.

2. Elément de vitrage selon la revendication 1,
**caractérisé** en ce que ladite couche réactive (3) contient de dioxyde de tungstène, de l'oxyde de molybdène, de l'oxyde de titane, de l'oxyde de vanadium, de l'oxyde de chrome, et/ou de l'oxyde de cérium.

3. Elément de vitrage selon la revendication 2,
**caractérisé** en ce que l'épaisseur de ladite couche réactive (3) se trouve au dedans de la gamme entre 100 nm et 800 nm.

4. Elément de vitrage selon une quelconque des revendications 1 à 3,
**caractérisé** en ce que ladite couche catalysateur (4) contient du platine, du rhodium, du palladium et/ou du nickel.

5. Elément de vitrage selon la revendication 4,
**caractérisé** en ce que l'épaisseur de ladite couche catalysateur (4) se trouve au dedans de la gamme entre 1 nm et 5 nm.

6. Elément de vitrage selon une quelconque des revendications 2 à 5,
**caractérisé** en ce que le taux de l'hydrogène dans ladite atmosphère de gaz est augmenté pour une réduction de la transmission.

7. Elément de vitrage selon la revendication 6,
**caractérisé** en ce que le taux de l'hydrogène correspond à 1 % environ à une atmosphère exempte de l'oxygène.

8. Elément de vitrage selon une quelconque des revendications 2 à 7,
**caractérisé** en ce que le taux de l'oxygène dans ladite atmosphère de gaz est augmenté pour une augmentation de la transmission.

9. Elément de vitrage selon la revendication 8,
**caractérisé** en ce que le taux de l'oxygène correspond à 0,5 % environ à une atmosphère exempte de l'hydrogène.

10. Elément de vitrage selon la revendication 8,
**caractérisé** en ce que l'augmentation de la transmission se fait moyennant de l'air atmosphérique.

11. Elément de vitrage selon une quelconque des revendications 1 à 10,
**caractérisé** en ce qu'une couche mince est disposée, qui est réfléchissante dans le domaine des rayons infrarouges et diaphane dans le spectre lumineux.

12. Elément de vitrage selon la revendication 11,
**caractérisé** en ce que ladite couche mince est une ouche argentine ou une couche semiconductrice.

13. Elément de vitrage selon une quelconque des revendications 1 à 12,
**caractérisé** en ce que ladite vitre (2) est un substrat en verre et/ou en polymère et/un un substrat métallique.
